# EUROPÄISCHE PATENTSCHRIFT

(11) **EP 2 418 144 B1**
(45) Veröffentlichungstag und Bekanntmachung des Hinweises auf die Patenterteilung: **20.07.2016**
(21) Anmeldenummer: 11177160.6
(22) Anmeldetag: 10.08.2011
(51) Int. Cl.: B63G 8/34, B63H 21/30, B63G 13/02, F16F 9/30, F16F 15/08

(54) **Lagerplattform zum Lagern mindestens eines Aggregats in einem Unterseeboot**
Support platform for storing at least one power unit in a submarine
Plate-forme de stockage d'au moins un agrégat dans un submersible

(30) Priorität: 12.08.2010 DE 102010034145
(43) Veröffentlichungstag der Anmeldung: 15.02.2012
(73) Patentinhaber: ThyssenKrupp Marine Systems GmbH, 24143 Kiel (DE)
(72) Erfinder: Becker, Roland, 24226 Heikendorf (DE); Paul, Axel, 24622 Gnutz (DE); Stäuble, Ulrich, 24232 Schönkirchen (DE)
(74) Vertreter: ThyssenKrupp Intellectual Property GmbH

(56) Entgegenhaltungen:
- EP-A1- 1 366 984
- EP-A1- 1 447 324
- EP-A2- 1 847 456
- WO-A1-93/21402
- WO-A1-2005/036015
- DE-A1- 2 425 419
- DE-A1- 4 208 889
- DE-A1- 10 212 075
- DE-B3- 10 357 226

## Beschreibung

Die Erfindung betrifft eine Lagervorrichtung zur Lagerung mindestens eines Aggregats in einem Unterseeboot mit den im Oberbegriff des Anspruchs 1 angegebenen Merkmalen.

Es ist bekannt, in militärischen Unterseebooten Aggregate, wie Antriebsmotoren, Pumpen und dergleichen elastisch auf Lagerplattformen zu lagern, wobei die Lagerplattformen wiederum elastisch auf einem mit dem Druckkörper des Unterseeboots verbundenen Bootsfundament gelagert sind. Die Lagerplattformen werden aus vorgefertigten Stahlprofilen, vorzugsweise Doppel-T-Trägern und anderen speziell angefertigten Stahlbauteilen gefertigt, wobei die Doppel-T-Träger eine Tragstruktur der Lagerplattform bilden.

Es hat sich gezeigt, dass bei den bekannten Lagerplattformen die Anzahl der Eigenfrequenzen in bestimmten Frequenzbereichen sehr hoch ist. Da die gelagerten Aggregate eine Vielzahl von Anregefrequenzen erzeugen und auch auf die Lagerplattform übertragen, werden die Lagerplattformen in der Regel auch in einigen ihrer Eigenfrequenzen angeregt. Hieraus resultiert Körperschall, der gegebenenfalls direkt über das Bootsfundament oder über Nebenwege an den Druckkörper weitergeleitet werden kann, was zu einer bei einem im militärischen Unterseeboot unerwünschten akustischen Signatur führt.

Eine Lagerplattform gemäß dem Oberbegriff von Anspruch 1 ist in der DE 102 12 075 A1 offenbart.

Vor diesem Hintergrund liegt der Erfindung die Aufgabe zugrunde, eine Lagervorrichtung zur Lagerung mindestens eines Aggregates in einem Unterseeboot mit einer Lagerplattform zum Lagern des Aggregats zu schaffen, bei der eine Eigenfrequenzanregung der Lagerplattform zu deutlich niedrigeren Körperschallpegeln führt.

Gelöst wird diese Aufgabe durch eine Lagervorrichtung mit den in Anspruch 1 angegebenen Merkmalen. Vorteilhafte Weiterbildungen dieser Lagervorrichtung ergeben sich aus den Unteransprüchen, der nachfolgenden Beschreibung sowie der Zeichnung. Hierbei können gemäß der Erfindung die in den Unteransprüchen angegebenen Merkmale jeweils für sich aber auch in technisch sinnvoller Kombination die erfindungsgemäße Lösung gemäß Anspruch 1 weiter ausgestalten.

Die erfindungsgemäße Lagervorrichtung zur Lagerung mindestens eines Aggregats in einem Unterseeboot weist eine Lagerplattform mit mindestens zwei Lagerteilen auf. Diese Lagerteile sind eigensteif ausgebildet, sodass sie sich selbst nicht aufgrund der von dem zu lagernden Aggregat ausgeübten Gewichtskraft verformen. Beispielsweise können die Lagerteile aus Stahl oder einem Material mit ähnlichen Festigkeitseigenschaften ausgebildet sein. Ferner weist die erfindungsgemäße Lagervorrichtung Federelemente auf, über welche die Lagerplattform auf einem mit einem Druckkörper des Unterseeboots starr verbundenen Fundament aufstellbar ist. Gemäß der Erfindung sind die Lagerteile mittels einer viskoelastischen Schicht miteinander verbunden. Es ist demnach zwischen den Lagerteilen eine Schicht aus viskoelastischem Material vorgesehen, die einen flächigen Stoffschluss zwischen den Lagerteilen schafft.

Hierbei wird vorteilhaft die Fähigkeit viskoelastischer Materialien ausgenutzt, aufgrund ihrer elastischen Eigenschaften federnd nachzugeben, gleichzeitig aber wegen ihrer viskosen Eigenschaften die Funktion eines Dämpfungselements auszuüben. Insofern wirkt die viskoelastische Schicht zwischen den Lagerteilen bei geeigneter Anordnung und Auslegung wie ein Federdämpfungselement innerhalb der Lagerplattform, mit dem der Körperschallpegel bei einer Eigenfrequenzanregung der Lagerplattform deutlich verringert werden kann. Darüber hinaus wird durch die viskoelastische Schicht eine Übertragung der Körperschallenergie auf den Druckkörper des Unterseeboots zumindest vermindert und günstigenfalls verhindert. Des Weiteren erlaubt es die zumindest zweiteilige Ausgestaltung der Lagerplattform auch, gegebenenfalls Lagerteile aus unterschiedlichen Materialien zu verwenden.

Besonders vorteilhaft kann die erfindungsgemäße Lagerplattform aus mehr als zwei Lagerteilen bestehen, wobei die benachbart angeordnete Lagerteile verbindenden viskoelastische Schichten gegebenenfalls auch in schräg oder vorzugsweise senkrecht zueinander ausgerichteten Ebenen ausgerichtet sein können. Vorteilhaft können die viskoelastischen Schichten beispielsweise normal und parallel zu einer auf die Lagerplattform wirkenden Gewichtskraft ausgerichtet sein. Die Dicke der viskoelastischen Schichten in Verbindungsrichtung der Lagerteile wird zweckmäßigerweise in Abhängigkeit des Gewichts der auf der Lagerplattform gelagerten Aggregate und/oder in Abhängigkeit der von diesen Aggregaten verursachten Eigenschwingungsanregungen der Lagerplattform gewählt.

Um mittels der viskoelastischen Schicht eine möglichst sichere Verbindung der Lagerteile zu schaffen und ein möglichst großes Schwingungsdämpfungsvermögen innerhalb des Bauteilverbundes der Lagerteile zu erzielen, ist vorteilhaft vorgesehen, die viskoelastische Schicht in einer Haupterstreckungsrichtung der Lagerteile ausgerichtet zwischen den Lagerteilen anzuordnen. Hierbei ist unter einer Haupterstreckungsrichtung der Lagerteile eine Richtung zu verstehen, in der die Lagerteile möglichst große und vorzugsweise ihre größten Abmessungen aufweisen. Zur Schaffung möglichst großer Kontaktflächen zwischen der viskoelastischen Schicht und den zu verbindenden Lagerteilen ist weiter vorteilhaft vorgesehen, die viskoelastische Schicht zwischen zwei sich in einer Haupterstreckungsrichtung der Lagerteile ausgerichteten Flachseiten der Lagerteile anzuordnen.

Zur Bildung einer viskoelastischen Schicht zwischen zwei benachbarten Lagerteilen kann vorteilhafterweise vorgesehen sein, ein viskoelastisches Material zwischen den Lagerteilen zu vergießen. Demnach kann ein viskoelastisches Material in flüssiger Form in einen Zwischenraum zwischen zwei miteinander zu verbindenden benachbarten Lagerteilen eingebracht werden, wo es aushärtet und eine stoffschlüssige Verbindung der Lagerteile schafft.

Besonders vorteilhaft können die Lagerteile mit einem Klebeband mit viskoelastischen Eigenschaften miteinander verklebt sein. Es kann also zum Verbinden der Lagerteile ein Klebeband mit einem viskoelastischen Trägermaterial verwendet werden, das zweckmäßigerweise beidseitig mit einem Haftklebstoff beschichtet ist. Zur Bildung der viskoelastischen Schicht zwischen den Lagerteilen, kann das Klebeband gegebenenfalls einlagig, aber auch mehrlagig zwischen den Lagerteilen angeordnet sein.

Erfindungsgemäß weist die Lagerplattform eine Tragstruktur auf, deren Träger aus zumindest paarweise angeordneten eigensteifen Profilelementen ausgebildet sind, wobei die Profilelemente mit einer viskoelastischen Schicht verbunden sind. Hierbei können mittels der viskoelastischen Schicht sowohl gleiche als auch unterschiedliche Profilelemente miteinander verbunden sein. Auf der Tragstruktur können ein oder mehrere Aggregate direkt oder indirekt, beispielsweise auf einer auf der Tragstruktur angeordneten Platte, elastisch gelagert sein. Zur Bildung der Träger werden jeweils zwei oder mehr Profilelemente verwendet, wobei die zwischen den Profilelementen angeordnete viskoelastische Schicht den einzelnen Trägern der Tragstruktur ein internes Schwingungsdämpfungsvermögen verleiht, ohne die statische Steifigkeit der Tragstruktur wesentlich zu beeinflussen. Die zur Bildung der Träger verwendeten Profilelemente können z. B. handelsübliche Profilstahlelemente sein.

Gemäß der Erfindung ist die Tragstruktur als ein Rahmen und vorzugsweise als ein rechteckiger Rahmen ausgebildet. Demzufolge sind die die Tragstruktur bildenden Träger derart miteinander verbunden, dass sie seitlich einen Freiraum vorzugsweise geschlossen einfassen.

In vorteilhafter Weiterbildung kann der Rahmen einen Innenrahmen aus miteinander verbundenen U-Trägern aufweisen. Unter U-Trägern sind im üblichen Sinne längliche Trägerelemente mit einem U-Profil zu verstehen. Der Innenrahmen bildet vorteilhaft eine starre Struktur, die der erfindungsgemäßen Lagervorrichtung eine Grundsteifigkeit verleiht. Die Schenkel der den Innenrahmen bildenden U-Träger sind bevorzugt in das Innere des Rahmens gerichtet. Dementsprechend weist der Innenrahmen an allen Außenseiten ebene Flächen auf, an denen in schneller und einfacher Weise über viskoelastische Schichten weitere Profilelemente befestigt werden können.

So ist bei dieser Ausgestaltung bevorzugt vorgesehen, dass an den Außenseiten der Stege der den Innenrahmen bildenden U-Träger weitere U-Träger zur Bildung eines Doppel-T-Profils über viskoelastische Schichten befestigt sind. Demnach weisen die Stege der miteinander zu verbindenden U-Träger die gleiche Breite auf, sodass die Schenkel (auch als Flansche bezeichnet) dieser U-Träger gemeinsam eine ebene Außenseite bilden. Die Flachseiten der Stege der miteinander zu verbindenden U-Träger sind einander zugewandt, wobei zwischen den Stegen jeweils eine viskoelastische Schicht angeordnet ist.

In einer weiteren vorteilhaften Weiterbildung dieser Ausgestaltung können an den Außenseiten der Schenkel der U-Träger jeweils mittels einer viskoelastischen Schicht Leisten befestigt sein. Das heißt, außenseitig der in entgegengesetzten Richtungen auskragenden Schenkel der miteinander im Bereich der Stege mittels einer viskoelastischen Schicht verbundenen U-Träger werden über weitere viskoelastische Schichten Leisten bzw. Flachteile befestigt, so dass jeder der den Rahmen bildenden Träger innerhalb des Trägers drei viskoelastische Schichten aufweist, wobei die zur Befestigung der Leisten dienenden viskoelastischen Schichten normal zu der die U-Profile miteinander verbindenden viskoelastischen Schicht ausgerichtet sind und so in den Trägern eine Eigenschwingungsdämpfung in unterschiedlichen Richtungen ermöglichen. Bevorzugt entspricht die Breite der auf den Schenkeln der U-Träger befestigten Leisten der Gesamtlänge der aneinander angrenzenden Schenkel der U-Träger.

Die erfindungsgemäße Lagervorrichtung ist zum Einsatz in einem Unterseeboot vorgesehen. Ein solches Unterseeboot bildet auch Teil der Erfindung. Dieses Unterseeboot weist eine Lagervorrichtung zur Lagerung mindestens eines Aggregats auf, die elastisch auf einem mit dem Druckkörper starr verbundenen Fundament, beispielsweise einem Deck, aufgestellt ist. Ein Bestandteil der Lagervorrichtung ist eine Lagerplattform mit den oben beschriebenen Merkmalen und Vorteilen, bei der von den zu lagernden Aggregaten verursachte Eigenschwingungsanregungen der Lagerplattform günstigstenfalls nicht auf den Druckkörper des Unterseeboots übertragen werden.

Nachfolgend ist die Erfindung anhand eines in der Zeichnung dargestellten Ausführungsbeispiels näher erläutert. In der Zeichnung zeigt:
- Fig. 1: schematisch stark vereinfacht in einer Querschnittsansicht einen Druckkörper eines Unterseeboots mit einer darin angeordneten Lagervorrichtung für Aggregate,
- Fig. 2: einen Rahmen einer Lagerplattform der Lagervorrichtung nach Fig. 1 in einer perspektivischen Explosionsdarstellung, und
- Fig. 3a-3e: die Herstellungsschritte zur Herstellung eines Trägers des Rahmens nach Fig. 2.

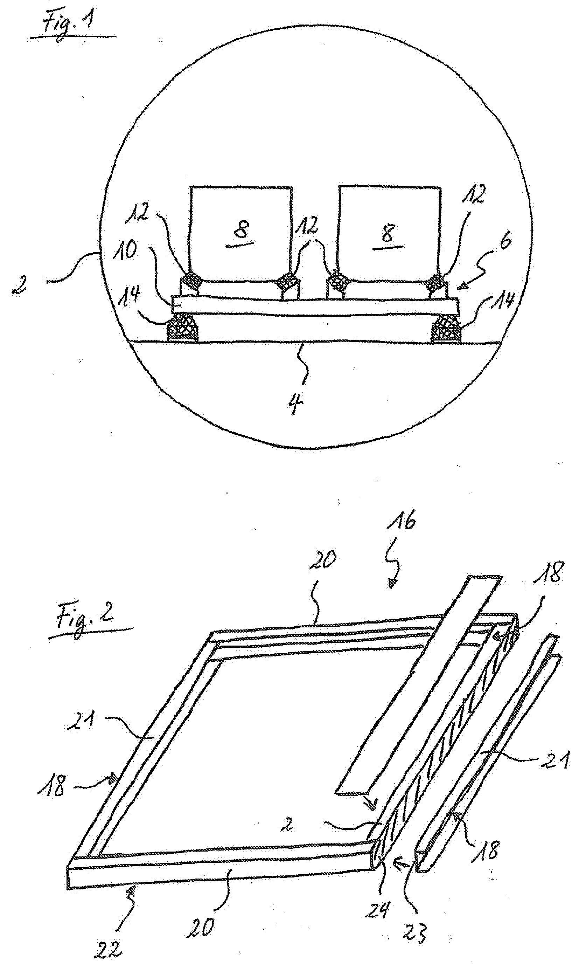

In dem in Fig. 1 dargestellten Druckkörper 2 eines Unterseebootes ist ein Deck 4 angeordnet, das ein Fundament für eine Lagervorrichtung 6 bildet. Das Deck 4 ist in üblicher Weise mit der Wandung des Druckkörpers 2 starr verbunden. Die Lagervorrichtung 6 dient zur Lagerung von Aggregaten 8, die dort auf einer Lagerplattform 10 auf Gummifedern 12 elastisch gelagert aufgestellt sind. Die Lagerplattform 10 ist über Federelemente 14 elastisch auf dem Deck 4 gelagert.

Die Lagerplattform 10 weist eine Tragstruktur in Form eines rechteckigen Rahmens 16 auf (Fig. 2). Bei dem Rahmen 16 sind zwei im Querschnitt u-förmige Träger 18, nachfolgend U-Träger genannt, und zwei U-Träger 20 über Schweißverbindungen zur Bildung eines starren Innenrahmens 22 zusammengefügt, wobei die Schenkel 21 der U-Träger 18 und 20 in das Innere des Rahmens 16 weisen. Alle verwendeten U-Träger 18 und 20 sind aus Stahl ausgebildet.

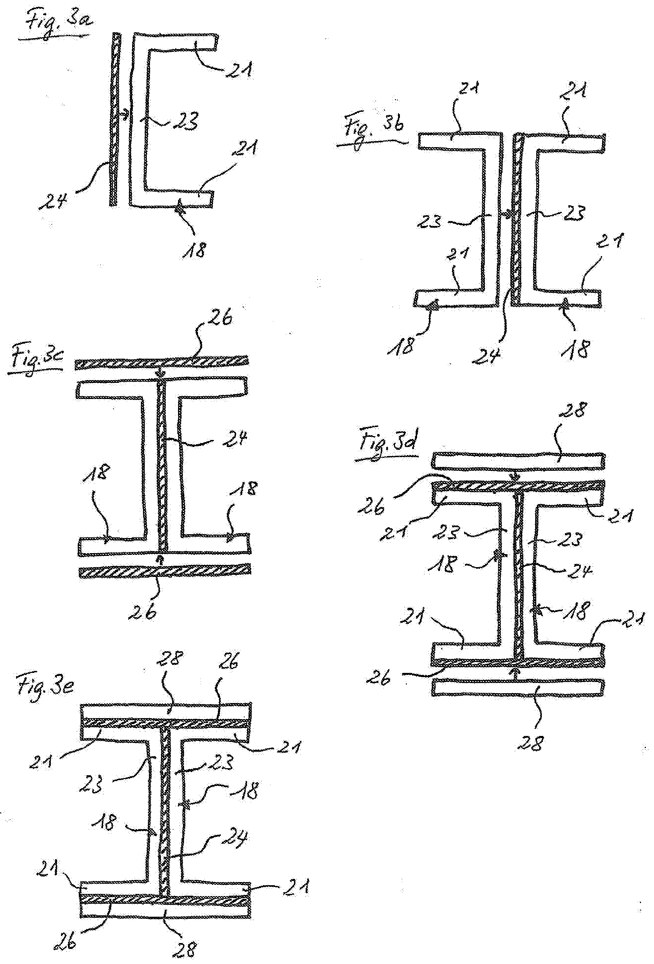

Wie in Fig. 2 exemplarisch an einem der U-Träger 18 und insbesondere in den Fig. 3a bis 3e dargestellt ist, werden an den Stegen 23 aller U-Träger 18 und 20 an der von den auskragenden Schenkeln 21 abgewandten Flachseite Klebebänder 24 verklebt. Bei den Klebebändern 24 handelt es sich um doppelseitig klebende Klebebänder 24, deren Trägermaterial viskoelastische Eigenschaften aufweist. An den von den U-Trägern 18 und 20 abgewandten Seiten der an den U-Trägern 18 und 20 befestigten Klebebänder 24 wird jeweils ein weiterer U-Träger 18 bzw. 20 verklebt. Die so miteinander verbundenen U-Träger 18 und 20 weisen miteinander korrespondierende Abmessungen auf.

An den Außenseiten der Schenkel 21 der miteinander über das Klebeband 24 verbundenen U-Träger 18 und 20 wird jeweils ein weiteres doppelseitig klebendes Klebeband 26 angebracht. Auch das Trägermaterial des Klebebands 26 weist viskoelastische Eigenschaften auf. Über das Klebeband 26 sind flache Leisten 28, die wie die U-Träger 18 und 20 aus Stahl ausgebildet sind, an den U-Trägern 18 und 20 befestigt.

Gemeinsam bilden die miteinander verbunden U-Träger 18 und 20 sowie die Leisten 28 Trägerelemente des Rahmens 16 mit einem Doppel-T-Profil. Die von den Klebebändern 24 und 26 zwischen benachbarten Lagerteilen, d.h. den U-Trägern 18 und 20 sowie den Leisten 28 gebildeten viskoelastischen Schichten verleihen der Lagerplattform 10 eine innere Dämpfung, die bei einer Eigenschwingungserregung der Lagerplattform 10 die Entwicklung von Körperschall und eine Übertragung des Körperschalls auf den Druckkörper 2 des Unterseeboots behindert und bestenfalls verhindert.

### Bezugszeichenliste

- 2: - Druckkörper
- 4: - Deck
- 6: - Lagervorrichtung
- 8: - Aggregat
- 10: - Lagerplattform
- 12: - Gummifeder
- 14: - Federelement
- 16: - Rahmen
- 18: - U-Träger
- 20: - U-Träger
- 21: - Schenkel
- 22: - Innenrahmen
- 23: - Steg
- 24: - Klebeband
- 26: - Klebeband
- 28: - Leiste

## Patentansprüche

1. Lagerplattform (10) zum Lagern mindestens eines Aggregats (8) in einem Unterseeboot mit mindestens zwei mittels einer viskoelastischen Schicht verbundenen Lagerteilen, **dadurch gekennzeichnet, dass** die Lagerplattform (10) eine Tragstruktur mit Trägern aufweist, wobei die Träger aus zumindest paarweise angeordneten eigensteifen Profilelementen ausgebildet sind, welche mit einer zwischen den Profilelementen angeordneten viskoelastischen Schicht verbunden sind, und wobei die Profilelemente Lagerteile darstellen und die Tragstruktur ein Rahmen (16) ist.

2. Lagerplattform (10) nach Anspruch 1, **dadurch gekennzeichnet, dass** die viskoelastische Schicht in einer Haupterstreckungsrichtung der Lagerteile ausgerichtet vorzugsweise zwischen zwei Flachseiten der Lagerteile angeordnet ist.

3. Lagerplattform (10) nach einem der vorangehenden Ansprüche, **dadurch gekennzeichnet, dass** ein viskoelastisches Material zwischen den Lagerteilen vergossen ist.

4. Lagerplattform (10) nach einem der Ansprüche 1 oder 2, **dadurch gekennzeichnet, dass** die Lagerteile mit einem Klebeband (24, 26) mit viskoelastischen Eigenschaften miteinander verklebt sind.

5. Lagerplattform (10) nach einem der vorangehenden Ansprüche, **dadurch gekennzeichnet, dass** der Rahmen (16) einen Innenrahmen (22) aus miteinander verbundenen U-Trägern (18, 20) aufweist, deren Schenkel (21) in das Innere des Rahmens (16) gerichtet sind.

6. Lagerplattform (10) nach Anspruch 5, **dadurch gekennzeichnet, dass** an den Außenseiten der Stege (23) der den Innenrahmen (22) bildenden U-Träger (18, 20) weitere U-Träger (18, 20) zur Bildung eines Doppel-T-Profils über das viskoelastische Material befestigt sind.

7. Lagerplattform nach Anspruch 6, **dadurch gekennzeichnet, dass** an den Außenseiten der Schenkel (21) der U-Träger (18, 20) Leisten (28) über das viskoelastische Material befestigt sind.

8. Unterseeboot mit einer elastisch auf einem mit dem Druckkörper starr verbundenen Fundament elastisch aufgestellten Lagervorrichtung (6), **dadurch gekennzeichnet, dass** die Lagervorrichtung (6) eine Lagerplattform (10) nach den vorangehenden Ansprüchen aufweist.

## Claims

1. Mounting platform (10) for mounting at least one power unit (8) in a submarine, comprising at least two mounting parts connected by means of a viscoelastic layer, **characterized in that** the mounting platform (10) has a support structure with supports, wherein the supports are formed from intrinsically rigid profiled elements which are arranged at least in pairs and which are connected by a viscoelastic layer arranged between the profiled elements, and wherein the profiled elements constitute mounting parts and the support structure is a frame (16).

2. Mounting platform (10) according to Claim 1, **characterized in that** the viscoelastic layer is oriented in a main direction of extent of the mounting parts, preferably being arranged between two flat sides of the mounting parts.

3. Mounting platform (10) according to either of the preceding claims, **characterized in that** a viscoelastic material is poured between the mounting parts.

4. Mounting platform (10) according to either of Claims 1 and 2, **characterized in that** the mounting parts are adhesively bonded to one another with an adhesive tape (24, 26) having viscoelastic properties.

5. Mounting platform (10) according to one of the preceding claims, **characterized in that** the frame (16) has an inner frame (22) made up of interconnected U-shaped supports (18, 20) of which the legs (21) are directed into the interior of the frame (16).

6. Mounting platform (10) according to Claim 5, **characterized in that** further U-shaped supports (18, 20) are fastened to the outer sides of the webs (23) of the U-shaped supports (18, 20) forming the inner frame (22) in order to form a double-T-profile via the viscoelastic material.

7. Mounting platform according to Claim 6, **characterized in that** strips (28) are fastened via the viscoelastic material to the outer sides of the legs (21) of the U-shaped supports (18, 20).

8. Submarine having a mounting device (6) elastically set up elastically on a foundation rigidly connected to the pressure body, **characterized in that** the mounting device (6) has a mounting platform (10) according to the preceding claims.

## Revendications

1. Plateforme de stockage (10) pour stocker au moins un agrégat (8) dans un submersible avec au moins deux parties de stockage reliées au moyen d'une couche viscoélastique, **caractérisée en ce que** la plateforme de stockage (10) comporte une structure portante dotée de supports, le support étant réalisé à partir d'au moins des éléments profilés à rigidité propre disposés par paire reliés à une couche viscoélastique disposée entre les éléments profilés et les éléments profilés représentant des parties de stockage et la structure portante étant un cadre (16).

2. Plateforme de stockage (10) selon la revendication 1, **caractérisée en ce que** la couche viscoélastique est orientée dans une direction d'extension principale des parties de stockage de préférence entre deux côtés plats des parties de stockage.

3. Plateforme de stockage (10) selon l'une quelconque des revendications précédentes, **caractérisée en ce qu'**un matériau viscoélastique est coulé entre les parties de stockage.

4. Plateforme de stockage (10) selon l'une quelconque des revendications 1 ou 2, **caractérisée en ce que** les parties de stockage sont collées entre elles à une bande de colle (24, 26) présentant des propriétés viscoélastiques.

5. Plateforme de stockage (10) selon l'une quelconque des revendications précédentes, **caractérisée en ce que** le cadre (16) comporte un cadre intérieur (22) composé de supports en U (18, 20) reliés entre eux dont les branches (21) sont orientées dans l'intérieur du cadre (16).

6. Plateforme de stockage (10) selon la revendication 5, **caractérisée en ce que** des supports en U (18, 20) supplémentaires sont fixés aux côtés extérieurs des étais (23) des supports en U (18, 20) formant le cadre intérieur (22) via le matériau viscoélastique, pour former un double profilé en T.

7. Plateforme de stockage selon la revendication 6, **caractérisée en ce que** des baguettes (28) sont fixées aux côtés extérieurs des branches (21) des supports en U (18, 20) via le matériau viscoélastique.

8. Submersible avec un dispositif de stockage (6) élastique placé de façon élastique sur une base reliée de façon rigide au corps de compression, **caractérisé en ce que** le dispositif de stockage (6) comporte une plateforme de stockage (10) selon les revendications précédentes.
